Europäisches Patentamt

European Patent Office

Office européen des brevets

(11) Veröffentlichungsnummer: **0 517 063 A1**

## (12) EUROPÄISCHE PATENTANMELDUNG

(21) Anmeldenummer: **92108776.3**

(22) Anmeldetag: **25.05.92**

(30) Priorität: **07.06.91 DE 9107026 U**

(43) Veröffentlichungstag der Anmeldung:
**09.12.92 Patentblatt 92/50**

(84) Benannte Vertragsstaaten:
**AT BE CH DE ES FR GB IT LI NL**

(51) Int. Cl.⁵: **G06K 11/18**

(71) Anmelder: **SIEMENS AKTIENGESELLSCHAFT
Wittelsbacherplatz 2
W-8000 München 2(DE)**

(72) Erfinder: **Müller, Lothar
Michaelsbergstr. 28
W-7520 Bruchsal 4(DE)**

(54) **Vorrichtung zum Verschieben eines Cursors und/oder von Bildbereichen auf einen Bildschirm.**

㊷ Oft wird zum Bewegen eines Cursors (CU) auf dem Bildschirm (BS) oder zum Auswählen bzw. Verschieben von mehreren Zeichen oder von ganzen Bildern eine sogenannte "Maus" eingesetzt. Dieses bekannte Bedienelement ist insbesondere im industriellen Bereich umständlich zu handhaben. Die erfindungsgemäße Vorrichtung weist eine Verschiebeeinheit (VE) auf, die auf einer annähernd parallel zu einem Rand des Bildschirms (BS) verlaufenden Führungsschiene (FS) axial bewegbar und um deren Achse drehbar ist. Damit ist dem Bediener der gedankliche Bezug zwischen Bewegung am Bildschirm (BS) und der Bewegung der Verschiebeeinheit (VE) gegeben.

Die Erfindung wird angewandt in Datenverarbeitungsanlagen, in Bedien- und Beobachtungssystemen.

Die Erfindung betrifft eine Vorrichtung zum Verschieben eines Cursors und/oder von Bildbereichen auf einem Bildschirm.

Oft wird zum Bewegen einer Marke (Cursor) auf dem Bildschirm eines Sichtgerätes eine sogenannte "Maus" eingesetzt. Der Cursor wird entsprechend der Bewegung der "Maus", z. B. einer Bewegung in horizontaler oder diagonaler Richtung, verschoben. Die "Maus" wird auch zum Auswählen bzw. Verschieben von mehreren Zeichen oder von ganzen Bildern verwendet, wenn die gesamte darzustellende Information in einem Großbild enthalten ist, das nicht auf einmal auf dem Bildschirm gezeigt werden kann. Es wird dann nur ein Ausschnitt des Großbildes dargestellt, der mit der "Maus" in beliebiger Richtung über das Großbild verschoben werden kann. Neben der "Maus" sind andere Bedienelemente, wie Lichtgriffel, Grafik-Tabletts, Rollkugeln oder Steuerknüppel, bekannt, die ebenfalls sowohl zum Bewegen des Cursors als auch zum Verschieben oder Auswählen von Zeichen oder ganzen Bildern verwendet werden.

Die bekannten Bedienelemente sind insbesondere im industriellen Bereich umständlich zu handhaben.

Der vorliegenden Erfindung liegt die Aufgabe zugrunde, eine Vorrichtung gemäß dem Oberbegriff des Anspruchs 1 zu schaffen, die eine Verschiebung des Cursors und/oder von Bildbereichen auf einem Bildschirm vereinfacht.

Diese Aufgabe wird durch die im kennzeichnenden Teil des Anspruchs 1, 2 oder 3 angegebenen Maßnahmen gelöst.

Dadurch, daß die Verschiebeeinheit auf einer annähernd parallel zu einem Rand des Bildschirms verlaufenden Führungsschiene axial bewegbar und um deren Achse drehbar ist, ist eine einfache Verschiebung eines Cursors bzw. eines Bildbereiches möglich. Der Cursor wird z. B. in X-Richtung eines kartesischen Koordinatensystems auf dem Bildschirm durch eine entsprechende axiale Bewegung der Verschiebeeinheit in X-Richtung verschoben. Der Cursor kann in Y-Richtung bewegt werden, indem die Verschiebeeinheit um die Achse der Führungsschiene nach oben bzw. unten gedreht wird. Dem Bediener am Bildschirm ist somit der gedankliche Bezug zwischen der Bewegung des Cursors am Bildschirm und der Bewegung der Verschiebeeinheit gegeben.

Die Verschiebung des Cursors in Y-Richtung kann auch dadurch bewirkt werden, daß die Führungsschiene um eine zu ihr parallele Achse drehbar gelagert ist und bei einer Drehung nach oben der Cursor in Richtung oberer Bildschirmrand und bei einer Drehung nach unten der Cursor in Richtung unterer Bildschirmrand bewegt wird.

Auch ist es möglich, parallel zur Y-Achse eine zweite Führungsschiene vorzusehen, auf der die erste Führungsschiene in Y-Richtung bewegbar angebracht ist. Eine Verschiebung der ersten Führungsschiene in Y-Richtung bewirkt eine entsprechende Bewegung des Cursors auf dem Bildschirm.

Die Führungsschiene kann sowohl an dem Bildschirm als auch an dem dem Bildschirm zugeordneten Rechnergehäuse oder an einem Tisch montiert werden.

Es ist üblich, daß viele auf einem Rechner ablaufende Programme durch die Funktionstasten einer "Maus" gesteuert werden. Damit diese Programme durch die neue Vorrichtung ebenfalls gesteuert werden können, ist die Verschiebeeinheit ebenfalls mit entsprechenden Funktionstasten versehen.

Weitere vorteilhafte Ausgestaltungen der Erfindung ergeben sich aus den weiteren Unteransprüchen.

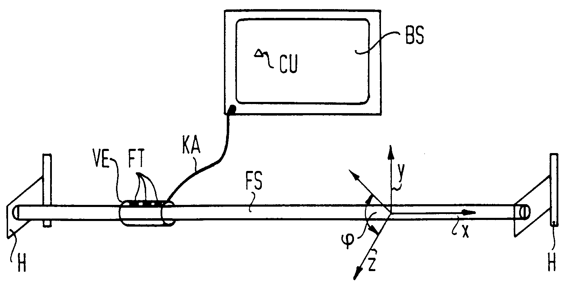

Anhand der Zeichnung, in der ein Ausführungsbeispiel der Erfindung dargestellt ist, wird die Erfindung näher verdeutlicht.

Die Figur zeigt eine Vorrichtung zum Verschieben eines Cursors auf einem Bildschirm. In ihr ist ein rechtwinkliges, kartesisches, rechtshändiges Koordinatensystem zur besseren Erläuterung der Erfindung eingezeichnet. Mit VE ist eine Verschiebeeinheit bezeichnet, die auf einer Führungsschiene FS in deren axialer Richtung bewegbar ist. Zur Übertragung der Wegimpulse während der Bewegung der Verschiebeeinheit VE ist diese mit einem Kabel KA mit einem Bildschirm BS verbunden. Die Achse der Führungsschiene FS fällt mit der X-Achse des Koordinatensystems zusammen und ist parallel zum oberen bzw. unteren Rand des Bildschirms BS angeordnet. Wird die Verschiebeeinheit VE in die positive X-Richtung bewegt, so bewegt sich ein Cursor CU ebenfalls in diese Richtung auf dem Bildschirm BS. Entsprechend wird der Cursor CU in die negative X-Richtung verschoben, falls die Verschiebeeinheit VE in die negative X-Richtung bewegt wird. Die Verschiebeeinheit VE ist im Ausführungsbeispiel als Hohlzylinder ausgebildet und auf der zylindrischen Führungsschiene FS drehbar um deren Achse gelagert. Wird die Verschiebeeinheit VE nach oben gedreht, d. h., wird diese um einen Winkel $\phi$ zwischen den Werten 0 und 90° gedreht, so verschiebt sich der Cursor CU von der Bildmitte bis zum oberen Bildschirmrand. Entsprechend wandert der Cursor CU in Richtung des unteren Bildschirmrandes, falls die Verschiebeeinheit VE nach unten gedreht wird. Die "gedankliche" Zuordnung zwischen der Bewegung der Verschiebeeinheit VE und des Cursors CU ist somit gegeben. Mit der Halterung H kann die Führungsschiene FS an dem Bildschirm BS, an einem diesem Bildschirm BS zugeordneten Rechnergehäuse oder an einem Arbeitstisch montiert werden.

Wie erläutert, ist die Vorrichtung mit einer hohlzylindrischen Verschiebeeinheit und einer zylindrischen Führungsschiene ausgebildet. Die Vorrichtung kann aber auch mit einer quaderförmigen Führungsschiene und einer ebenfalls quaderförmigen Verarbeitungseinheit versehen sein. Auch dann wird der Cursor in X-Richtung entsprechend der axialen Bewegung der Verschiebeeinheit VE verschoben. Die Verschiebung des Cursors CU in Y-Richtung allerdings wird durch eine Drehung der Führungsschiene FS um den Winkel $\phi$ bewirkt. Dazu ist es erforderlich, die Führungsschiene FS an der Halterung H um eine Achse parallel zu einem Rand des Bildschirms BS drehbar zu lagern, um die Führungsschiene FS nach oben und unten bewegen zu können. Auch ist ein weiteres Kabel vorzusehen, das von der Halterung H die Wegimpulse in Y-Richtung dem Bildschirm BS zuleitet.

Wie im Ausführungsbeispiel bisher verdeutlicht, wird der Cursor CU in X- bzw. Y-Richtung durch eine axiale Verschiebung der Verschiebeeinheit VE in X-Richtung bzw. durch eine Drehung der Verschiebeeinheit VE bzw. Führungsschiene FS um eine Achse parallel zur X-Achse bewirkt. Selbstverständlich kann man die Führungsschiene parallel zur Y-Richtung anordnen, so daß eine axiale Bewegung der Verschiebeeinheit VE auf der Führungsschiene FS eine Bewegung des Cursors CU in Y-Richtung bewirkt und eine Drehung der Verschiebeeinheit VE bzw. der Führungsschiene FS um eine Achse parallel zur Y-Achse eine Verschiebung des Cursors CU in X-Richtung verursacht.

Es ist auch möglich, die Vorrichtung derart auszubilden, daß die Führungsschiene FS, deren Achse parallel zum Bildschirm und zu einer ersten Koordinate verläuft, auf einer senkrecht zu dieser angeordneten zweiten Führungsschiene bewegbar angebracht werden kann. In diesem Fall wird eine Verschiebung des Cursors CU in Richtung der zweiten Koordinate durch eine entsprechende Bewegung der Führungsschiene FS auf der zweiten Führungsschiene bewirkt.

Um die Führungsschiene FS vor störenden Einflüssen in einer rauhen Prozeßumgebung zu schützen, kann diese mit einem hier nicht dargstellten Faltenbalg umgeben sein.

Die Verschiebeeinheit VE ist vorteilhaft mit Funktionstasten FT versehen. Dadurch wird erreicht, daß auf einem Rechner ablaufende Programme, die durch die Funktionstasten FT gesteuert werden, ablauffähig sind.

Die Bewegung der Verschiebeeinheit VE bzw. der Führungsschiene FS kann z. B. - wie bekannt - mit induktiven, mechanischen oder optischen Mitteln erfaßt werden. Vorzugsweise sind in die Führungsschiene FS Markierungen eingeätzt, welche die Verschiebeeinheit VE während des Bewegungsvorgangs optisch abtastet und die für die beiden Koordinatenrichtungen Wegimpulse abgibt. Es sind dann zwei optische Abtaster für beide Koordinatenrichtungen erforderlich. Die Wegimpulse werden einer Steuereinheit zugeführt, wo sie ausgewertet werden.

**Patentansprüche**

1. Vorrichtung zum Verschieben eines Cursors (CU) und/oder von Bildbereichen auf einem Bildschirm (BS), **dadurch gekennzeichnet,** daß eine Verschiebeeinheit (VE) auf einer annähernd parallel zu einem Rand des Bildschirms (BS) verlaufenden Führungsschiene (FS) axial bewegbar und um deren Achse drehbar ist.

2. Vorrichtung zum Verschieben eines Cursors (CU) und/oder von Bildbereichen auf einem Bildschirm (BS), **dadurch gekennzeichnet,** daß eine Verschiebeeinheit (VE) auf einer annähernd parallel zu einem Rand des Bildschirms (BS) verlaufenden, drehbar gelagerten Führungsschiene (FS) axial bewegbar ist.

3. Vorrichtung zum Verschieben eines Cursors (CU) und/oder von Bildbereichen auf einem Bildschirm (BS), **dadurch gekennzeichnet,** daß die Verschiebeeinheit (VE) auf einer annähernd parallel zu einem Rand des Bildschirms (BS) verlaufenden Führungsschiene (FS) axial bewegbar ist, die auf einer annähernd senkrecht zu dieser verlaufenden weiteren Führungsschiene bewegbar ist.

4. Vorrichtung nach einem der Ansprüche 1 bis 3, **dadurch gekennzeichnet,** daß die Führungsschiene (FS) am Bildschirm (BS) oder an einem Rechnergehäuse oder an einem Arbeitstisch angebracht ist.

5. Vorrichtung nach einem der Ansprüche 1 bis 4, **dadurch gekennzeichnet,** daß die Verschiebeeinheit (VE) mit Funktionstasten (FT) versehen ist.

6. Vorrichtung nach einem der Ansprüche 1 bis 5, **dadurch gekennzeichnet,** daß die Führungsschiene (FS) mit einem Faltenbalg versehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 706 733 (CULVER C.)<br>* Zusammenfassung *<br>* Seite 1, Zeile 23 - Zeile 30 *<br>* Seite 2, Zeile 29 - Zeile 31 *<br>* Seite 4, Zeile 33 - Seite 5, Zeile 3; Abbildung 5A * | 1,2,4 | G06K11/18 |
| Y | | 5 | |
| | --- | | |
| Y | US-A-4 823 634 (CULVER C.)<br>* Zusammenfassung *<br>* Spalte 4, Zeile 48 - Zeile 53 *<br>* Spalte 9, Zeile 64 - Zeile 68; Abbildung 9 *<br>* Spalte 11, Zeile 43 - Zeile 47; Abbildung 14 * | 5 | |
| A | | 1,4 | |
| | --- | | |
| A | EP-A-0 382 353 (HEWLETT-PACKARD COMPANY)<br>* Zusammenfassung * | 2 | |
| | ----- | | |

| RECHERCHIERTE SACHGEBIETE (Int. Cl.5) |
|---|
| G06K<br>G06F<br>G05G |

Der vorliegende Recherchenbericht wurde für alle Patentansprüche erstellt

| Recherchenort | Abschlußdatum der Recherche | Prüfer |
|---|---|---|
| DEN HAAG | 28 AUGUST 1992 | Piero Bravo |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes
   Dokument

EPO FORM 1503 03.82 (P0403)